# EUROPÄISCHE PATENTSCHRIFT

(11) **EP 2 411 463 B1**
(45) Veröffentlichungstag und Bekanntmachung des Hinweises auf die Patenterteilung: **20.11.2019**
(21) Anmeldenummer: 10706606.0
(22) Anmeldetag: 26.02.2010
(51) Int. Cl.: C08L 23/10, C08L 23/14, C08L 23/20, C08L 33/00, C08L 33/10, C08L 33/12, C08L 51/00, C09D 123/10, C09D 123/14, C09D 123/20, C09J 123/10, C09J 123/14, C09J 123/20, C09D 151/00, C09J 151/00

(54) **BESCHICHTUNGSMASSEN ZUR BESCHICHTUNG VON POLYOLEFIN-OBERFLÄCHEN ENTHALTEND EINEN HAFTVERMITTLER BASIEREND AUF POLYOLEFIN-GRAFT-POLY(METH)ACRYLAT COPOLYMEREN**
COATING MATERIALS FOR COATING POLYOLEFIN SURFACES CONTAINING A GRAFT POLY(METH)ACRYLATE COPOLYMER-BASED ADHESION PROMOTER
MATÉRIAUX DE REVÊTEMENT DE SURFACES EN POLYOLÉFINES CONTENANT UN PROMOTEUR D'ADHÉSION À BASE DE COPOLYMÈRES DE POLYOLÉFINES GREFFÉES AVEC DES POLY(MÉTH)ACRYLATES

(30) Priorität: 26.03.2009 DE 102009001886
(43) Veröffentlichungstag der Anmeldung: 01.02.2012
(73) Patentinhaber: Evonik Degussa GmbH, 45128 Essen (DE)
(72) Erfinder: KOHLSTRUK, Stephan, 48249 Dülmen (DE); MINDACH, Lutz, 44797 Bochum (DE); MAUS, Stefanie, 60314 Frankfurt (DE); BECKER, Hinnerk Gordon, 45257 Essen (DE); BALK, Sven, 60594 Frankfurt (DE)
(74) Vertreter: Evonik Patent Association
(86) Internationale Anmeldenummer: PCT/EP2010/052446
(87) Internationale Veröffentlichungsnummer: WO 2010/108753

(56) Entgegenhaltungen:
- EP-A1- 1 985 659
- WO-A1-2008/072689
- WO-A1-2008/126510
- GB-A- 2 225 332
- US-A1- 2005 124 753

## Beschreibung

### Gebiet der Erfindung

Polyolefine wie Polyethylen, Polypropylen, EPDM oder Poly-α-olefine spielen als Werkstoff z.B. in der Verpackungsindustrie, der Automobilindustrie oder zur Herstellung von Formteilen wie dem Gehäuse eines Mobilfunkgerätes eine große Rolle. Einziger Nachteil dieser leicht zu verarbeitenden, kostengünstigen Materialien sind die Oberflächeneigenschaften. Polyolefine lassen sich nicht direkt lackieren oder verkleben. Dazu wird eine Grundierung oder andersartige Vorbehandlung des Materials benötigt. Die vorliegende Erfindung betrifft einen neuartigen halogen- und säurefreien Haftvermittler für Polyolefinoberflächen, der mit (Meth)acrylaten bepfropfte, amorphe Polyolefine enthält. Ein Haftvermittler hat gegenüber einem Primer, den Vorteil, dass nach der Formulierung nur ein Verfahrensschritt zur Beschichtung der Polyolefinoberfläche nötig ist.

### Stand der Technik

Die Oberflächenmodifikation von sehr unpolaren Werkstoffen wie Polyolefinen ist schon sehr lange im Fokus der universitären und industriellen Forschung. Polypropylene oder Polyethylene sind mit polaren Bindemitteln, wie Sie die Grundlage der meisten Klebstoffe oder Lacke bilden, nicht direkt zu beschichten. Die Haftung von Polymeren wie Polyestern, Polyamiden, Polyacrylaten, Polymethacrylaten oder Polyurethanen auf Polyolefinen ist dazu in der Regel zu gering. Polyolefinfolien werden zur Polarisierung der Oberfläche daher zumeist vor der Beschichtung einer hochenergetischen Coronabehandlung unterzogen. Ein solches Verfahren ist jedoch nicht an Formteilen mit Kanten und unregelmäßig geformten Oberflächen anwendbar. Hier gibt es nur die Möglichkeit einer Beflammung, die aufwendig durchzuführen und an besonders unregelmäßig geformten Objekten oft im Kantenbereich zu schlechten Ergebnissen führt. Bessere Ergebnisse sind daher mit einer gut aufzutragenden Polymerlösung, die als Grundierungsmittel verwendet wird, zu erzielen.

Solche Grundierungsmittel basieren häufig auf halogenhaltigen Parafinen oder Polymeren. Siehe dazu zum Beispiel DE 100 11 384, in der Polydichlorbutadiene beschrieben sind. Die Haftung solcher Systeme ist jedoch nicht ausreichend gut, dass vollständig auf eine Vorbehandlung, wie eine Beflammung verzichtet werden könnte.

In WO 2006 124 232 wird ein Beschichtungssystem beschrieben, dass nach der Applikation UV-gehärtet werden muss. Ein solches Beschichtungssystem bedingt nicht nur einen zusätzlichen Arbeitsschritt, sondern zeigt auch weitere Nachteile wie eine verminderte Lagerstabilität.

In WO 2008 031 677 werden Polyolefine mit Harzen auf Keton- und/oder Aldehydharzen als Haftvermittler kombiniert. Dieses System hat gegenüber Einkomponentensystemen jedoch den Nachteil einer eventuell auftretenden Phasenseperation und eines beschränkten Anwendungsspektrums.

In WO 2008 039 595 wird ein wässriges Beschichtungssystem beschrieben, das aus Polyolefin-Polyether Blockcopolymeren mit einem hohen Anteil anionischer Gruppen zusammengesetzt ist. Dem Fachmann ist leicht ersichtlich, dass ein solches System nur mit sehr geringen Feststoffgehalten eingesetzt werden kann und eine gute Filmbildung aus einer wässrigen Lösung mit einem hohen Anteil schwerlöslicher Polyolefinblöcke schwierig ist.

In US 2004 0072 960 sind Grundierungsmittel beschrieben, die durch die Veresterung von carboxylierten Polyolefinen mit multifunktionellen Alkoholen erhalten werden. Bei den Alkoholen handelt es sich um niedermolekulare Verbindungen mit drei oder mehr OH-Gruppen. Dem Fachmann ist leicht ersichtlich, dass ein zu hoher Carboxylierungsgrad zu einer verminderten Haftung auf Polyolefinen führt, ein zu geringer Carboxylierungsgrad andererseits wiederum zu einer zu geringen polaren Funktionalisierung der Oberfläche.

Ein Verfahren zum Bepfropfen von zumeist amorphen Polyolefinen mit Acrylaten und/oder Methacrylaten ist schon lange bekannt und vielfältig durchführbar. Ein Verfahren in Form einer freiradikalischen Lösungspolymerisation ist beispielsweise in DE 101 50 898 beschrieben. Eine Umsetzung über eine Reaktivextrusion findet sich bei Badel et al. (J.of Pol. Sc.; Part A: Pol. Chem.; 45, 22, S. 5215, 2007). Eine Variante dieses Verfahrens mit einer alternativen Initiierung ist in WO 2004 113 399 zu finden. Eine kontrollierte Pfropfreaktion über eine Halogenmodifizierung eines Polyolefins und eine anschließende Atom Transfer Radikal Polymerisation findet sich bei Kaneko et al. (Macromol. Symp., 290, S.9-14, 2007). In keiner dieser Schriften wird eine Beschichtung bzw. Grundierung von Polyolefinoberflächen beschrieben.

In US 6,310,134 werden amorphe Polyolefine mit Säuren oder Anhydriden wie Acryl- oder Methacrylsäure bepfropft. Nachteil solcher Polymere ist die schlechte Löslichkeit in organischen und wässrigen Medien. In dieser Schrift wird das Problem der schlechten Löslichkeit durch sehr geringe Feststoffgehalte unterhalb von 15 gew% gelöst. Zur gleichmäßigen Beschichtung werden somit sehr große Lösungsmittelmengen benötigt oder man erhält eine sehr unregelmäßige Oberfläche. In US 5,523,358 werden Polypropylene analog mit Säuren bepfropft. Hier ist das Pfropfcopolymer während und nach der Reaktion fest und kann nur heterogen oder über eine Extrusionsbeschichtung auf das Substrat aufgetragen werden. Beide Verfahren führen jedoch zu ungleichmäßigen bzw. sehr dicken Grundierungen.

In US 6,262,182 wird das Problem der schlechten Löslichkeit der säuremodifizierten, amorphen Polyolefine durch die Verwendung von hochsiedenden Aromaten als Lösungsmittel gelöst. Bei der Auftragung haben solche Lösungsmittel jedoch große Nachteile bzgl. Emissionen, Toxizität und auch Trocknungstemperaturen bzw. -zeiten.

Polyolefine, zumeist amorphe Poly-α-olefine können auch mit Silanreagenzien modifiziert werden. Solche Systeme werden beispielsweise in WO 2007 008 765 bzw. EP 1 900 773 beschrieben. Nachteil solcher Copolymere ist der hohe Olefinanteil und der nur geringe Anteil funktioneller, polarer Gruppen. bei diesen polaren Gruppen handelt es sich zudem um Alkoxsilylgruppen, die nur sehr wenig zur Verbesserung der Löslichkeit beitragen. Daher sind auch diese Polymere nur schlecht löslich und daher schwierig und ungenau zu applizieren.

In EP 1 900 773 werden mit wenigen Silylgruppen bepfropfte Poly-α-Olefine beschrieben. Obwohl diese Produkte eine sehr gute Haftung zeigen, weisen auch diese Polymere einen sehr hohen Olefinanteil auf und sind nur schwer, d.h. in sehr geringen Konzentrationen in organischen Lösungsmitteln löslich.

In EP 1 601 470 und EP 1 508 579 werden ebenfalls mit Silylgruppen funktionalisierte Polyolefine als Grundierungsmittel beschrieben. Nachteil solcher Systeme ist weiterhin, dass die Haftung zur Beschichtung ausschließlich über die Silylgruppen vermittelt wird. Diese weisen jedoch bekanntermaßen eine verminderte Lagerungsstabilität auf, so dass der Anteil der funktionellen Gruppen gering gehalten werden muss.

In DE 195 16 457 wird die Mischung solcher modifizierten Polyolefine mit säuremodifizierten Polyolefinen als Klebstoff beschrieben. Dem Fachmann ist leicht ersichtlich, dass ein solches System nur über sehr schlechte Lagerungseigenschaften verfügt. Auch zeigt ein solcher Klebstoff aufgrund der geringen Zahl funktioneller Gruppen gegenüber einem polaren Polymer verminderte Haftungs- bzw. Anfangshaftungswerte.

In der WO 2007/001694 werden Klebstoffzusammensetzungen beschrieben, die funktionalisierte Polymere (z.B. silangepfropfte oder mit Maleinsäureanhydrid gepfropfte Propylenpolymere) als Haftvermittler enthalten. Die Basispolymere werden mit Metallocenkatalysatoren hergestellt, und weisen nicht die erforderlichen Material- und Verabreitungseigenschaften auf.

In der WO 2007/002177 werden Klebstoffzusammensetzungen auf Basis von statistischen Poly(propylen)-Copolymeren mit einem mindestens 50 gew%igen Propylenanteil und funktionalisierten Polyolefincopolymeren und nicht funktionalisierten Klebharzen beschrieben, wobei die Poly(propylen)-Copolymere eine Schmelzenthalpie von 0,5 bis 70 J/g und einen Anteil isotaktischer Propylentriaden von mindestens 75% aufweisen, und die verwendeten funktionalisierten syndiotaktischen Polymere einen Gehalt an funktionellen Monomereinheiten von mindestens 0,1 % aufweisen. Die beschriebenen Poly(propylen)-Copolymeren werden bevorzugt durch Metallocenkatalyse hergestellt. Die funktionalisierten Polyolefincopolymeren umfassen funktionalisierte Poly(propylen)-Copolymere, syndiotaktische Polypropylencopolymere und sogenannte isotaktisch-ataktische Polypropylen-Pfropfpolymere. Basispolymere mit hohen Anteilen an höheren 1-Olefinen, wie z.B. 1-Butenanteil werden nicht beschrieben. Aufgrund des teilweise sehr hohen Anteils an isotaktischen Polypropyleneinheiten (mit starkem radikalischen Polymerabbau) stellt sich ein schlechtes Verhältnis von Pfropfung/Funktionalisierung zu Kettenspaltung ein. Als funktionelle Monomereinheiten werden insbesondere Maleinsäureanhydrid und Glycidylmethacrylate aber auch diverse andere funktionelle Gruppen wie z.B. Vinylsilane genannt. Die Polyolefine werden ausschließlich mit kleinen Mengen dieser funktioneller Bausteine modifiziert und nicht mit (Meth)acrylatmischungen bepfropft.

EP 1985659 A1 offenbart eine flammhemmende Polyolefinharzzusammensetzung mit hervorragender Formverarbeitbarkeit, Beständigkeit gegen thermische Verformung und geeigneter Dehnbarkeit und Intensität, die reich an elastischer Verformung ist, und die als Komponente A ein thermoplastisches Harz mit einem Carbonylsauerstoffatom im Molekulargerüst, als Komponente B eine Copolymer, das eine Ethylenkomponente und eine Propylenkomponente enthält, als Komponente C ein modifiziertes Polyolefinpolymer mit einer sauren funktionellen Gruppe und einem gewichtsmittleren Molekulargewicht von 10.000 - 80.000 und als Komponente D eine anorganische Metallverbindung aufweist und im Wesentlichen frei von Halogenatomen ist.

In EP 2138547 A1 wird eine Harzzusammensetzung offenbart, die als Bindemittel für ein wässriges Beschichtungsmaterial für Harze auf Polyolefinbasis geeignet ist.

### Aufgabe

Aufgabe der vorliegenden Erfindung war es, ein neuartiges Beschichtungsverfahren von Polyolefinoberflächen mit Lack- oder Klebformulierungen, die keine direkte Haftung auf Polyolefinen aufweisen, zu ermöglichen. Insbesondere soll ein neuer Haftvermittler bereitgestellt werden, welcher sich durch eine gegenüber dem Stand der Technik bessere Anwendbarkeit auszeichnet.

Es bestand darüber hinaus die Aufgabe, dass die Polyolefinoberflächen mit einer Lack- oder Klebstoffformulierung, der insbesondere polare Bindemittel enthält, beschichtet werden können.

Eine dritte Aufgabe war es, die Polyolefinoberlfäche, dergestalt zu beschichten, dass die Beschichtung lückenlos und eben ist. Dies soll sowohl für Folien als auch für Formteile gelten.

Darüber hinaus bestand insbesondere die Aufgabe, dass das Beschichtungssystem für Polyolefinoberflächen aus nur einer Schicht, die möglichst einfach aufzutragen ist, bestehen soll.

Darüber hinaus bestand die Aufgabe darin, eine Lösung zur Verfügung zu stellen, die weder die Witterungsbeständigkeit des Beschichtungssystems negativ beeinflusst, noch toxikologisch kritisch sein könnte.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch Entwicklung eines Haftvermittlers, der zur Formulierung in Beschichtungssystemen für verschiedenartige Untergründe geeignet ist, dadurch gekennzeichnet, dass
ein Polymertyp A, ein Olefinpolymer oder Olefincopolymer, enthalten ist,
ein Polymertyp B, ein (Meth)acrylathomo- oder/und -copolymer ist, enthaltend Standardmethacrylate und/oder Standardacrylate, enthalten ist und
ein Polymertyp AB, ein Pfropfcopolymer aus Polymertyp A und Polymertyp B enthalten ist und
dass die Menge an Polymertyp A zwischen 5 gew% und 60 gew% beträgt,
dass die Menge an Polymertyp B zwischen 5 gew% und 70 gew% beträgt,
dass die Menge an Polymertyp AB zwischen 5 gew% und 70 gew% beträgt, bezogen auf die Gesamtmasse der Polymertypen A, B und AB,
und dass das Masseverhältnis der Summe der Polymertypen A, B und AB zur Masse des Lösungsmittels oder des Lösungsmittelgemischs zwischen 3:1 und 1:3, bevorzugt zwischen 2:1 und 1:2 beträgt, der Haftvermittler als Polymerlösung hergestellt und als Lösung weiterverarbeitet wird.

Alternativ kann der Haftvermittler auch mittels Substanzpolymerisation bzw. als Lösungspolymerisat, das anschließend getrocknet wird, hergestellt werden. In beiden Fällen ist eine Formulierung bzw. Weiterverarbeitung auch als Schmelze in 100%-Systemen, die als Beschichtungsformulierungen verwendet werden, möglich.

Gegenstand der vorliegenden Erfindung sind deshalb Beschichtungsmassen zur Beschichtung von Polyolefinen, enthaltend einen Haftvermittler, enthaltend eine Schmelze, filmbildende Dispersion oder Lösung, welche dadurch gekennzeichnet sind, dass ein Polymertyp A, ein Polyolefin oder ein Polyolefingemisch, enthalten ist,
ein Polymertyp B, ein (Meth)acrylathomo- oder/und -copolymer enthaltend Standardmethacrylate und/oder Standardacrylate, enthalten ist und
ein Polymertyp AB, ein Pfropfcopolymer aus Polymertyp A und Polymertyp B, enthalten ist,
dass die filmbildende Schmelze, Dispersion oder Lösung halogenfrei und säurefrei ist, wobei säurefrei maximal 70 mmol Säuregruppen / 1 g Polymer umschreibt und halogenfrei maximal 10 mmol Halogenatome / 1 kg Polymer umschreibt, und
dass die Menge an Polymertyp A zwischen 5 gew% und 60 gew% beträgt.
dass die Menge an Polymertyp B zwischen 5 gew% und 70 gew% beträgt.
dass die Menge an Polymertyp AB zwischen 5 gew% und 70 gew% beträgt,
bezogen auf die Gesamtmasse der Polymertypen A, B und AB.

Unter Beschichtungsmassen werden in diesem Zusammenhang filmbildende Formulierungen, die als Lack, Korrosionsschutzbeschichtung oder Grundierungsmittel verwendet werden, verstanden. Zusätzlich kann der Begriff Beschichtungsmassen hier für Kleb- oder Dichtstoffe stehen.

Die Bindemittel dieser Lack- bzw. Klebstoffformulierungen können beispielsweise auf Polyacrylaten, Polymethacrylaten, Polyurethanen, Polyestern, Polyamiden, Polystyrolen oder Mischungen oder Copolymeren dieser Komponenten basieren.

Überraschend wurde gefunden, dass ein solches Polymer als Haftvermittler in einer Beschichtungsmasse eine gute Haftung auf Polyolefinen bewirkt, ohne dass der Haftvermittler Halogene oder freie Säuregruppen aufweist. Halogenierte Bindemittel haben große Nachteile bezüglich Witterungsstabilität oder in toxikologischer Hinsicht.

Säurefunktionelle Polymere, zumal in organischen Lösungsmittel gelöst bzw. dispergiert, haben besonders hohe Lösungs- bzw. Schmelzviskositäten. Diese Eigenschaften erschweren die Applikation bzw. ermöglichen eine Applikation nur aus Lösungen mit äußerst geringem Feststoffgehalt. Säurefrei umschreibt in diesem Fall ein Bindemittel, das maximal 70 mmol Säuregruppen / 1g Polymer enthält. Halogenfrei umschreibt ein Bindemittel, das maximal 10 mmol Halogenatome / 1 kg Polymer enthält.

Optional kann der Polymertyp B zusätzliche funktionelle Gruppen, bei denen es sich nicht um Halogene oder Säuregruppen, insbesondere aber um Silylgruppen handelt, enthalten. Überraschend wurde gefunden, dass durch die Funktionalisierung mit Silylgruppen die Haftung auf Polyolefinen wie Polypropylen verbessert werden kann.

Es wurde gefunden, dass dieser zur Coformulierung in Beschichtungsmassen geeignete Haftvermittler die Haftung der Beschichtungsmassen auf verschiedenartigen Untergründen, besonders auf Polyolefinuntergründen, ganz besonders auf Polypropylenuntergründen verbessert und als Haftvermittler in verschiedenartigen Beschichtungssystemen, die sonst nicht auf olefinischen Oberflächen aufgebracht werden können, zu einer Einsetzbarkeit dieser Beschichtungsmassen zum Beispiel für Polyolefinuntergründe führt.

Bei den zu beschichtenden Polyolefinen kann es sich zum Beispiel um Poly-1-buten, Polypropylene, Polyethylene, Polyethylen-propylen Copolymere, Poly-α-olefine, EPDM, EPM, Polybutadiene (insbesondere auch SEBS-Blockcopolymere(Styrol-Ethylen / Buten-Styrol-Blockcopolymere)), hydrierte Polybutadiene oder Polyisoprene handeln.

Überraschend wurde auch gefunden, dass die erfindungsgemäße Beschichtungsmasse gut bei relativ niedrigen Temperaturen wie Raumtemperatur in aromatenfreien Lösungsmitteln löslich ist bzw. als 100%-System gegenüber dem Stand der Technik deutlich geringere Schmelzviskositäten aufweist. Diese Eigenschaften bewirken eine gegenüber dem Stand der Technik deutlich verbesserte Anwendbarkeit.

### Der Polymertyp A

Die erfindungsgemäß zu verwendenden Olefinpolymerisate und -Copolymerisate, entsprechend A, sind an sich bekannt. Es handelt sich in erster Linie um aus Ethylen-, Propylen-, Butylen- oder /und weiteren α-Olefinen mit 5-20 C-Atomen aufgebaute Polymerisate.

Besonders gut einsetzbar sind weitgehend amorphe Poly-α-Olefine. Als weitgehend amorphe α-Olefine können beispielsweise Homopolymere, wie z.B. amorphes Polypropylen (APP) oder amorphes Poly-1-buten verwendet werden oder vorzugsweise Co- und/oder Terpolymere mit folgender Monomerzusammensetzung:
0 bis 95 gew%, bevorzugt 3 bis 95 gew% eines oder mehrerer α-Olefine mit 4 bis 20 Kohlenstoffatomen,
5 bis 100 gew%, bevorzugt 5 bis 97 gew% Propen und
0 bis 50 gew%, bevorzugt 0 bis 20 gew% Ethen.

Als α-Olefin mit 4 bis 20 Kohlenstoffatomen werden bevorzugt 1-Buten, 1-Penten, 1-Hexen, 1-Octen, 1-Decen, 1-Dodecen, 3-Methyl-1-buten, ein Methylpenten wie z.B. 4-Methyl-1-penten, ein Methylhexen oder ein Methylhepten, allein oder in Mischung eingesetzt.

Die Herstellung derartiger Polymere ist z.B. in der EP 0 023 249 beschrieben. Die erfindungsgemäßen teilkristallinen Polyolefin sind beispielsweise durch Polymerisation von α-Olefin-Monomeren mit einem TiCl₃ • (AlCl₃)ₙ-Mischkatalysator (n = 0,2 bis 0,5) erhältlich, wobei eine Trialkylaluminiumverbindung wie etwa Triethylaluminium, bevorzugt Triisopropylaluminium, besonders bevorzugt Triisobutylaluminium als Cokatalysator eingesetzt wird. Die Aktivität des verwendeten Katalysators liegt üblicher Weise zwischen 5.000 und 20.000 g Polymer/g Katalysator. Das Monomer Ethen wird gasförmig eingesetzt, während die Monomere Propen und 1-Buten sowohl gasförmig als auch flüssig eingesetzt werden können. Höhere Homologe werden flüssig eingesetzt. Werden Propen und/oder 1-Buten flüssig eingesetzt, so muss im verwendeten Reaktor ein den Reaktionsbedingungen entsprechender Druck gehalten werden, welcher eine ausreichende Monomerkonzentration in der flüssigen Phase gewährleistet. Als Molmassenregler kommt gasförmiger Wasserstoff zum Einsatz. Die Polymerisation wird in einem inerten Lösungsmittel durchgeführt, welches z. B. aus der Gruppe der aliphatischen Kohlenwasserstoffe ausgewählt ist. Eine Polymerisation im vorgelegten Monomer ist ebenfalls möglich. Die Polymerisation wird entweder in einem Rührkessel oder in einer Rührkesselkaskade durchgeführt; in einer besonderen Ausführungsform kann auch ein Strömungsrohr bzw. ein rohrförmiger Reaktor mit Zwangsförderung (z. B. eine Schneckenmaschine) verwendet werden. Die Reaktionstemperatur liegt zwischen 30 und 220 °C, bevorzugt zwischen 70 und 150 °C und besonders bevorzugt zwischen 80 und 130 °C. Katalysator und Cokatalysator werden am Ende der Reaktion in geeigneter Weise zersetzt, wobei die zersetzten Katalysatorbestandteile entweder im Polymerisat verbleiben, oder über einen Waschschritt entfernt werden. Die erfindungsgemäßen Polymerisate können dem Stand der Technik entsprechend entweder in Form ihrer Reaktionslösung oder zu einem späteren Zeitpunkt chemisch stabilisiert werden, um sie vor dem schädigenden Einfluss von höheren Temperaturen, Sonneneinstrahlung, Luftfeuchtigkeit und Sauerstoff zu schützen. Dabei können beispielsweise Stabilisatoren, die gehinderte Amine (HALS-Stabilisatoren), gehinderte Phenole, Phosphite, UV-Absorber wie z. B. Hydroxybenzophenone, Hydroxyphenylbenzotriazole usw. und/oder aromatische Amine enthalten, zum Einsatz kommen. Die wirksame Menge an Stabilisatoren liegt dabei im Bereich von 0,1 bis 2 gew%, bezogen auf das Polymer. Um die Fließfähigkeit des Granulats und/oder Pulvers zu gewährleisten, können die im Polymerbereich üblicherweise verwendeten Fließhilfsmittel eingesetzt werden. Diese können sowohl anorganischer als auch organischer Natur sein sowie sowohl nieder- als auch hochmolekulare Komponenten enthalten, wobei in allen Fällen sowohl kristalline als auch amorphe Fließhilfsmittel eingesetzt werden können. Die Fließhilfsmittel können mit den anspruchsgemäßen Polyolefinen im Sinne der thermodynamischen Mischbarkeit sowohl verträglich als auch unverträglich sein. Beispiele sind Polyolefinwachse, die sowohl auf Polyethylen- als auch auf Polypropylenbasis basieren können, und Fischer-Tropsch-Wachse sowie Polyolefinwachse auf 1-Butenbasis.

Diese nicht modifizierten, weitgehend amorphen Poly-α-Olefine besitzen eine Schmelzenthalpie im Bereich von 0 bis 80 J/g, bevorzugt im Bereich von 1 bis 70 J/g, besonders bevorzugt im Bereich von 1 bis 60 J/g.

Die Schmelzenthalpie ist ein Maß für die Kristallinität des Polymers. Die Poly-α-Olefine weisen eine relativ geringe Kristallinität auf, d.h. sie sind weitgehend, jedoch nicht vollständig amorph. Es ist eine gewisse Kristallinität vorhanden, die für die geforderten Materialeigenschaften unabdingbar ist. Die beim Aufschmelzen detektierbaren kristallinen Bereiche erstrecken sich über einen großen Temperaturbereich von 0 °C bis 175 °C und sind von ihrer Intensität her je nach Lage unterschiedlich ausgeprägt. Die Poly-α-Olefine zeichnen sich in ihrer Kristallinität durch das Auftreten sowohl mono- als auch bi- und multimodaler Aufschmelzsignale aus, die zum Teil scharf getrennt sind, zum Teil ineinander übergehen.

Durch die niedrige Kristallinität kann einerseits eine hohe Transparenz, andererseits ein flexibles mechanisches Verhalten erhalten werden. Durch eine höhere Kristallinität kann aber auf der anderen Seite eine besondere Kombination vorteilhafter Materialeigenschaften erzielt werden. Anteile A im erfindungsgemäßen Bindemittel mit relativ hohen Kristallinitäten, wie z.B. Polybuten bzw. Buten-Copolymeren mit hohen Butenanteilen, weisen z.B. sehr gute Zugfestigkeiten auf. Gleichzeitig zeigen sie eine relativ geringe Oberflächenklebrigkeit.

Die Bestimmung der Schmelzenthalpie des kristallinen Anteils erfolgt über Differentialkalorimetrie (DSC) gemäß DIN 53 765 aus der zweiten Aufheizkurve bei einer Heizrate von 10 K/min.

Weiterhin weisen die nicht modifizierten, weitgehend amorphen Poly-α-Olefine einen durch Ring-&-Kugel-Methode bestimmte Erweichungspunkt (bestimmt nach DIN EN 1427) zwischen 75 und 165 °C auf, bevorzugt zwischen 79 und 162°C, besonders bevorzugt zwischen 80 und 158 °C und insbesondere bevorzugt zwischen 82 und 155 °C sowie eine gemäß DIN EN 1426 bestimmte Nadelpenetration von maximal 55*0,1 mm bevorzugt zwischen 3 und 50*0,1 mm, besonders bevorzugt zwischen 5 und 45*0,1 mm und insbesondere bevorzugt zwischen 7 und 42*0,1mm. Die durch Oszillationsrheologie bestimmte komplexe Schmelzviskosität bei 190 °C (bestimmt gemäß ASTM D 4440-01: "Standard Test Method for Plastics: Dynamic Mechanical Properties Melt Rheology" unter Verwendung eines Rheometers MCR 501 der Firma Anton Paar mit einer Platte-Platte-Geometrie mit einem Plattendurchmesser von 50 mm, bei einer maximalen Deformation von 1% und einer Messfrequenz von 1 Hz) beträgt maximal 550.000 mPa*s, bevorzugt maximal 350.000 mPa*s, besonders bevorzugt zwischen 2.500 und 250.000 mPa*s und insbesondere bevorzugt zwischen 5.000 und 200.000 mPa*s.

In einer besonderen, bevorzugten Ausführungsform werden teilkristalline 1-Olefin-Terpolymere auf Basis der Monomere Ethylen, Propylen und 1-Buten eingesetzt, die einen durch ¹³C-NMR-Spektroskopie bestimmten Ethylengehalt von 1 bis 12 gew%, bevorzugt von 2 bis 10 gew%, besonders bevorzugt von 3 bis 9 gew% und insbesondere bevorzugt von 3,5 bis 8 gew% aufweisen, während der ebenfalls durch ¹³C-NMR-Spektroskopie bestimmte Propylengehalt zwischen 50 und 80 gew%, bevorzugt zwischen 55 und 75 gew%, besonders bevorzugt zwischen 57 und 73 gew% und insbesondere bevorzugt zwischen 59 und 71 gew% liegt, während der ebenfalls durch ¹³C-NMR-Spektroskopie bestimmte 1-Butengehalt zwischen 20 und 50 gew%, bevorzugt zwischen 22 und 45 gew%, besonders bevorzugt zwischen 25 und 40 gew% und insbesondere bevorzugt zwischen 27 und 38 gew% liegt, wobei sich die Comonomeranteile von Ethylen, Propylen und 1-Buten auf 100% addieren. Die Nadelpenetration (bestimmt nach DIN EN 1426) der bevorzugten Terpolymere liegt zwischen 5 und 28*0,1mm, bevorzugt zwischen 7 und 26*0,1mm, besonders bevorzugt zwischen 9 und 25*0,1mm und insbesondere bevorzugt zwischen 10 und 23*0,1mm, während der durch Ring-&-Kugel-Methode bestimmte Erweichungspunkt (bestimmt nach DIN EN 1427) zwischen 90 und 125 °C, bevorzugt zwischen 95 und 122°C, besonders bevorzugt zwischen 97 und 120 °C und insbesondere bevorzugt zwischen 99 und 118 °C liegt und die durch Oszillationsrheologie bestimmte komplexe Schmelzviskosität bei 190 °C (bestimmt gemäß ASTM D 4440-01: "Standard Test Method for Plastics: Dynamic Mechanical Properties Melt Rheology" unter Verwendung eines Rheometers MCR 501 der Firma Anton Paar mit einer Platte-Platte-Geometrie mit einem Plattendurchmesser von 50 mm, bei einer maximalen Deformation von 1% und einer Messfrequenz von 1 Hz) maximal 90.000 mPa*s beträgt, bevorzugt 5.000 bis 75.000 mPa*s, besonders bevorzugt 7.500 bis 70.000 und insbesondere bevorzugt zwischen 10.000 und 65.000 mPa*s. Dadurch wird erreicht, dass das für die Pfropfreaktion eingesetzte Polyolefinterpolymer ein optimales Eigenschaftsprofil sowohl hinsichtlich seiner Einsetzbarkeit im Pfropfprozess als auch für seinen späteren Einsatz als gepfropftes Produkt aufweist. Insbesondere weist das bevorzugt eingesetzte Terpolymer eine gute Balance zwischen Kohäsion, Adhäsion und Flexibilität auf.

Die Mengen, die an Polymertyp A in der erfindungsgemäßen Mischung eingesetzt werden, liegen bezogen auf die am Ende der Reaktion polymeren Bestandteile zwischen 10 gew%und 65 gew%, bevorzugt zwischen 20 gew%und 60 gew%und ganz besonders bevorzugt zwischen 25 gew%und 55 gew%.

### Der Polymertyp B

Die im folgenden verwendete Schreibweise (Meth)acrylat steht für die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Monomere, die zur Herstellung des Polymertyps B polymerisiert werden, sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)methylether(meth)acrylat.

Unter Standardmethacrylaten bzw. Standardacrylaten werden Ester der (Meth)acrylsäure, die industriell Verwendung in der Synthese von Poly(meth)acrylat Formmassen, Klebstoffen, Dichstoffen oder Lackbindemitteln finden. Dies betrifft insbesondere Methyl(meth)acrylat, Ethyl(meth)acrylat, Propyl(meth)acrylat, n-Butyl(meth)acrylat, i-Butyl(meth)acrylat, t-Butyl(meth)acrylat und 2-Ethylhexyl(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinimid, Methylmaleinimid und Diene wie z.B. Divinylbenzol.

Die Mengen, die an Polymertyp B in der erfindungsgemäßen Mischung eingesetzt werden, liegen bezogen auf die am Ende der Reaktion polymeren Bestandteile zwischen 35 gew% und 90 gew%, bevorzugt zwischen 40 gew% und 80 gew% und ganz besonders bevorzugt zwischen 45 gew% und 75 gew%.

Zur Verbesserung der Haftung können die Seitenarme der Pfropfcopolymere optional auch Silylgruppen enthalten.

Als Beispiele für die Silylreste seien -Si(OMe)₃, -SiMe(OMe)₂, -SiMe₂(OMe), - Si(OPh)₃, -SiMe(OPh)₂, -SiMe₂(OPh), -Si(OEt)₃, -SiMe(OEt)₂, -SiMe₂(OEt), - Si(OPr)₃, -SiMe(OPr)₂, -SiMe₂(OPr), -SiEt(OMe)₂, -SiEtMe(OMe), -SiEt₂(OMe), - SiPh(OMe)₂, -SiPhMe(OMe), -SiPh₂(OMe), -SiMe(OC(O)Me)₂, -SiMe₂(OC(O)Me), -SiMe(O-N=CMe₂)₂ oder -SiMe₂(O-N=CMe₂) aufgeführt. Wobei die Abkürzungen Me für Methyl-, Ph für Phenyl-, Et für Ethyl- und Pr für iso- bzw. n-Propyl- stehen.

Eine Möglichkeit, solche Silylgruppen in Polymertyp B einzubauen, ist die Copolymerisation von silylfunktionellen (Meth)acrylaten. Als Beispiele für die (Meth)acrylreste seinen H₂C=CHC(O)O-CH₂-, H₂C=CCH₃C(O)O-CH₂-, H₂C=CHC(O)O-(CH₂)₂-, H₂C=CCH₃C(O)O-(CH₂)₂-, H₂C=CHC(O)O-(CH₂)₃- bzw. H₂C=CCH₃C(O)O-(CH₂)₃- aufgeführt.

Ein kommerziell verfügbares Monomer wäre zum Beispiel Dynasylan® MEMO der Firma Evonik Degussa GmbH. Dabei handelt es sich um 3-Methacryloxypropyltrimethoxysilan.

Eine weitere Möglichkeit, solche Silylgruppen in Polymertyp B einzubauen, ist die Copolymerisation von anderen silylfunktionellen Monomeren, die eine copolymerisierbare olefinische Gruppe, wie z.B. eine Allyl- oder Vinylgruppe, aufweisen.

Ein kommerziell verfügbares Monomer wäre zum Beispiel Dynasylan® VTMO der Firma Evonik Degussa GmbH. Dabei handelt es sich um Vinyltrimethoxysilan.

Eine dritte Möglichkeit, Silylgruppen in Polymertyp B einzubauen, ist die Verwendung von silylfunktionellen Reglern, die beispielsweise eine Thiolgruppe aufweisen.

Ein kommerziell verfügbares Monomer wäre zum Beispiel Dynasylan® MTMO der Firma Evonik Degussa GmbH. Dabei handelt es sich um 3-Mercaptopropyltrimethoxysilan. Weitere verfügbare Silane sind 3-Mercaptopropyltriethoxysilan, 3-Mercaptopropylmethyldimethoxysilan oder Mercaptomethylmethyldiethoxysilan (Fa. ABCR).

Der Anteil silylfunktioneller Monomere an der Monomermischung B liegt zwischen 0 gew% und 20 gew%, bevorzugt zwischen 0 gew% und 10 gew% und besonders bevorzugt zwischen 0 gew% und 5 gew%.

### Der Polymertyp AB

### Herstellung der Pfropfpolymerisate AB

Das Pfropfpolymerisat AB wird in der Regel hergestellt, indem man eine 5 bis 50 gew%ige, vorzugsweise eine 10 bis 25 gew%ige, Lösung des Polymers des Typs A, bevorzugt eines Poly-α-Olefins in einem geeigneten, unter Polymerisationsbedingungen inerten Lösungsmittel, das im Normalfall einen Siedepunkt oberhalb der Verfahrenstemperatur besitzt, herstellt, indem man das Polymer in dem Lösungsmittel bevorzugt oberhalb des Erweichungspunktes des Poly-α-Olefins rührt Zu dieser möglichst homogenen Lösung wird anschließend bei Reaktionstemperatur ein geeigneter Initiator, vorzugsweise ein peroxidischer Radikal-Initiator, gegeben. Nach einer Initierungszeit von 0 bis 60 min, bevorzugt 0 bis 30 min, insbesondere bevorzugt 1 bis 20 min wird die Monomermischung zur Synthese des Polymertyps B zugegeben bzw. über einen längeren Zeitraum zudosiert. Vorzugsweise finden Perester wie tert.-Butylperoctoat Verwendung. Die Initiatorkonzentration richtet sich nach der Zahl der gewünschten Pfropfstellen und dem gewünschten Molekulargewicht des Segments B. Im Allgemeinen liegt die Initiatorkonzentration zwischen 0,2 gew%, und 3 gew%, bezogen auf das Polymerisat. Parallel zur Pfropfreaktion wird naturgemäß bei diesem Verfahren ein Poly(meth)acrylat des Typs B gebildet.

Für Poly-α-Olefine, die unter den beschriebenen Bedingungen, z.B. aufgrund einer Erweichungstemperatur oberhalb der Siedetemperatur des Lösungsmittels, nicht mit dem Lösungsmittel mischbar sind, können alternativ Emulgatoren zugesetzt werden. Die Pfropfreaktion wird in diesem Fall analog in einer organischen Dispersion durchgeführt.

Die Polymerisationszeit liegt gewöhnlich zwischen 4 und 8 Stunden. Die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C
In einer alternativen Methode wird mit Hilfe eines geeigneten Emulgators eine Dispersion aus der Komponente A herstellt und auf diese Monomere, die zur Komponente B führen, unter den dafür geeigneten Reaktionsbedingungen analog der ersten Methode aufgepfropft. Der Emulgator kann einen dem System AB ähnlichen Aufbau besitzen. Die Verfahren zur Herstellung geeigneter Emulgatoren vom Typ AB sind an sich bekannt. So kann z. B. nach der Methode der Übertragungspfropfung vorgegangen werden: (Vgl. auch Houben-Weyl, Methoden der Org. Chemie, Bd. 1411, S. 114, H.A.J. Battaerd, G.W. Tregear, Polymer Reviews, Vol. 16, Interscience (1967)).

Das Verfahren kann in beliebigen Lösungsmitteln wie H₂O; Acetaten, vorzugsweise Butylacetat, Ethylacetat, Propylacetat; Ketonen, vorzugsweise Ethylmethylketon, Aceton; Ethern; Aliphaten, vorzugsweise Pentan, Hexan; Biodiesel; aber auch Weichmachern wie niedrigmolekulare Polypropylenglycolen oder Phthalaten durchgeführt werden. Bevorzugt wird das erfindungsgemäße Bindemittel in aromatenfreien Lösungsmittelsystemen hergestellt. Aromaten sind aus toxikologischer Sicht bedenklich und sollten auch in industriellen Anwendungen nach Möglichkeit vermieden werden. Überraschend wurde gefunden, dass die erfindungsgemäße Herstellung von Pfropfcopolymeren besonders gut in Acetaten wie Butylacetat durchgeführt werden kann.

Einschränkend auf die Wahl des Lösungsmittels ist oft der Erweichungspunkt des Poly-α-Olefins. Die Siedetemperatur des gewählten Lösungsmittels sollte idealerweise oberhalb dieses Bereiches liegen. Alternativ kann die Pfropfreaktion unter Druck durchgeführt werden.

Auch Gemische aus den vorstehend beschriebenen Lösungsmitteln kommen für das Trägersystem infrage. Das Masseverhältnis der Summe der Polymertypen A, B und AB zur Masse des Lösungsmittels oder des Lösungsmittelgemischs kann zwischen 3:1 und 1:3, bevorzugt zwischen 2:1 und 1:2 betragen. Bevorzugt enthält das Lösungsmittelgemisch keine Aromaten.

Neben der Lösungspolymerisation können die erfindungsgemäßen Bindemittel auch mittels Emulsions-, Miniemulsions-, Mikroemulsions-, Suspension- oder Substanzpolymerisation hergestellt werden.

Eine besonders bevorzugte Methode ist die Substanzpolymerisation, insbesondere die kontinuierliche Substanzpolymerisation. Diese kann in Form einer Reaktivextrusion oder in einem Polymerisationskneter durchgeführt werden. Vorteil eines solchen Verfahrens ist, dass man das Produkt frei von Lösungsmitteln erhält und in dieser Form direkt in Schmelzanwendungen wie zum Beispiel Schmelzklebstoffen oder reaktiven Schmelzklebstoffen einsetzen kann. Besonders geeignet ist ein Lösungsmittel freies System auch für so genannte High Solid Lacke, die auf einem möglichst hohen Feststoffgehalt basieren. Durch Formulierung mit einem erfindungsgemäßen Produkt als Substanz, wird eine solche Lackformulierung nicht weiter verdünnt. Bei mittels Lösungspolymerisation hergestellten Polymeren dagegen muss vor einer dieser Anwendungen erst in einem zusätzlichen Verfahrensschritt das Lösungsmittel entfernt werden. Bei Emulsions- bzw. Suspensionspolymerisaten muss erst das Restwasser durch Trocknen entfernt werden. Dies ist insbesondere bei reaktiven, eventuell feuchtigkeitsvernetzenden Systemen wichtig.

Im Fall eines Pfropfprozesses in Lösung liegt die Reaktionstemperatur des Pfropfprozesses bei 30 bis 200 °C, bevorzugt bei 40 bis 190 °C, besonders bevorzugt bei 50 bis 180 °C und insbesondere bevorzugt bei 55 bis 140 °C. Die Lösungspfropfung erfolgt entweder in diskontinuierlicher oder in kontinuierlicher Weise. Im Fall einer diskontinuierlichen Reaktionsführung wird zunächst das feste Polymer (z.B. als Granulat, Pulver usw.) im verwendeten Lösungsmittel gelöst. Alternativ dazu wird direkt eine konditionierte Polymerisationslösung aus dem Herstellverfahren des Basispolymers verwendet und auf Reaktionstemperatur gebracht. Es folgt die Zugabe des Monomers/der Monomeren und der/des Radikalstarter(s). In einer besonders bevorzugten Ausführungsform werden Lösungsmittel Basispolymere(e) und Monomer(e) vorgelegt und auf Reaktionstemperatur gebracht, während der/die Radikalstarter über einen definierten Zeitraum kontinuierlich zudosiert wird/werden. Dies hat den Vorteil, dass die stationäre Radikalkonzentration niedrig ist, und daher das Verhältnis von Pfropfreaktion zu Kettenspaltung besonders günstig (d.h. mehr Pfropfreaktion und weniger Kettenspaltung) ausfällt. In einer weiteren besonders bevorzugten Ausführungsform werden Lösungsmittel und Basispolymer(e) vorgelegt und auf Reaktionstemperatur gebracht, während Monomer(e) und Radikalstarter - gemeinsam (z.B. in Form einer Mischung) oder voneinander getrennt- über einen definierten Zeitraum kontinuierlich zudosiert werden. Dies hat den Vorteil, dass sowohl die stationäre Radikalkonzentration als auch die Monomerkonzentration am Reaktionsort niedrig sind, was sowohl die Kettenspaltung als auch die Bildung von Homopolymeren zurückdrängt. Dies ist insbesondere bei der Verwendung von Monomeren wichtig, die bei Reaktionstemperatur stark zur thermisch initiierten (Homo)polymerisation neigen. Ganz besonders bevorzugt wird im Anschluss an die unterschiedlichen definierten Zudosierungszeiträume eine weitere Menge an Radikalstarter(n) zudosiert, um den Gehalt an Restmonomeren in der Reaktionslösung zu minimieren. Als Reaktor wird bevorzugt ein Rührkessel verwendet, die Verwendung alternativer Reaktionsbehälter wie z.B. diskontinuierlicher Knetreaktoren ist ebenfalls möglich, und insbesondere bei niedrigen Reaktionstemperaturen und/oder hohen Polymerkonzentrationen bevorzugt.

Im Fall einer kontinuierlichen Reaktionsführung wird zunächst in einem oder mehreren Vorlagebehältern (z.B. Rührkesseln) das feste Polymer in mindestens einem Lösungsmittel gelöst und anschließend kontinuierlich in den/die Reaktionsbehälter dosiert. In einer alternativen, ebenfalls besonders bevorzugten Ausführungsform, wird direkt eine konditionierte Polymerlösung aus einem Herstellprozess des Basispolymers verwendet. In einer weiteren ebenfalls besonders bevorzugten Ausführungsform wird das feste Polymer (z.B. in Form von Pulver, Granulat, Pellets usw.) zusammen mit mindestens einem Lösungsmittel kontinuierlich in eine (ein- oder mehrwellige) Schneckenmaschine oder einen Kontikneter dosiert, unter Einwirkung von Temperatur und/oder Scherung gelöst, und anschließend kontinuierlich in den/die Reaktionsbehälter dosiert. Als Reaktionsbehälter bzw. Reaktoren für die Durchführung der kontinuierlichen Pfropfreaktion in Lösung kommen kontinuierliche Rührkessel, Rührkesselkaskaden, Strömungsrohre, Strömungsrohre mit Zwangsförderung (z.B. Schneckenmaschinen), Reaktionskneter sowie deren beliebige Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden können. Besonders bevorzugt werden zwei- und/oder mehrwellige Extruder eingesetzt. Insbesondere bevorzugt zur kontinuierlichen Herstellung der erfindungsgemäßen modifizierten Polymere in Lösung ist die Verwendung einer Reaktorkombination aus Strömungsrohr, Strömungsrohr mit Zwangsförderung und kontinuierlichem Rührkessel in beliebiger Reihenfolge, wobei bevorzugt entweder im Strömungsrohr mit Zwangsförderung oder im kontinuierlichen Rührkessel auch die Entfernung von Restmonomeren und flüchtigen Neben-/Abbauprodukten erfolgt. Alternativ bevorzugt handelt es sich um ein Schmelzeverfahren, wobei mindestens ein Radikalstarter direkt in die Schmelze dosiert wird. Insbesondere liegt bei dieser Verfahrensvariante die Temperatur der Polymermasse zum Zeitpunkt der Zudosierung mindestens eines Radikalstarters oberhalb der SADT (Self accelerating decompositon temperature = Temperatur oberhalb der eine selbstbeschleunigende Zersetzung einsetzen kann) mindestens eines der zudosierten Radikalstarter.

Die Reaktionstemperatur des Pfropfprozesses in der Schmelze liegt bei 160-250 °C, bevorzugt bei 165-240 °C, besonders bevorzugt bei 168 bis 235 °C und insbesondere bevorzugt bei 170 bis 230 °C.

Die Schmelzepfropfung erfolgt entweder in diskontinuierlicher oder in kontinuierlicher Fahrweise. Im Fall einer diskontinuierlichen Reaktionsführung wird das feste Polymer (z.B. als Granulat, Pulver, Pellets usw.) zunächst aufgeschmolzen und gegebenenfalls homogenisiert. Alternativ wird direkt eine konditionierte Polymerschmelze aus einem Polymerisationsprozess verwendet und auf Reaktionstemperatur gebracht. Es folgt die Zugabe von Monomere(en) und Radikalstarter(n).

In einer besonderen Ausführungsform werden Monomer(e) und Polymerschmelze homogen durchmischt und auf Reaktionstemperatur gebracht, während der/die Radikalstarter über einen definierten Zeitraum kontinuierlich zudosiert werden. Dies hat den Vorteil, dass die stationäre Radikalkonzentration niedrig ist, und daher das Verhältnis von Pfropfreaktion zu Kettenspaltung besonders günstig (d.h. mehr Pfropfreaktion und weniger Kettenspaltung) ausfällt.

In einer weiteren besonders bevorzugten Ausführungsform wird die Polymerschmelze vorgelegt und homogenisiert, während Monomer(e) und Radikalstarter gemeinsam (z.B. in Form einer Mischung) oder getrennt über einen definierten Zeitraum kontinuierlich zudosiert werden. Dies hat den Vorteil, dass sowohl die stationäre Radikalkonzentration, als auch die Monomerkonzentration am Reaktionsort niedrig bleibt, was sowohl die Kettenspaltung als auch die Bildung von Homopolymer zurückdrängt. Letzteres ist besonders bei der Verwendung von Monomeren wichtig, die bei der vorliegenden Reaktionstemperatur zur thermischen (Homo)polymerisation neigen. Als Reaktor wird bevorzugt ein Rührkessel mit wandgängigem Rühraggregat oder ein Reaktionskneter verwendet.

Im Fall einer kontinuierlichen Reaktionsführung wird zunächst in einem oder mehreren Vorlagebehältern (z.B. Rührkesseln) das feste Polymer aufgeschmolzen und anschließend kontinuierlich in den/die Reaktionsbehälter dosiert. In einer alternativen, ebenfalls besonders bevorzugten Ausführungsform, wird direkt eine konditionierte Polymerschmelze aus einem Polymerisationsprozess verwendet. In einer weiteren ebenfalls besonders bevorzugten Ausführungsform wird das feste Polymer (z.B. in Form von Pulver, Granulat, Pellets usw.) kontinuierlich in eine (ein- oder mehrwellige) Schneckenmaschine oder einen Kontikneter dosiert, unter Einwirkung von Temperatur und/oder Scherung aufgeschmolzen, und anschließend kontinuierlich in den/die Reaktionsbehälter dosiert. Als Reaktionsbehälter bzw. Reaktoren für die Durchführung der kontinuierlichen Pfropfreaktion in der Schmelze kommen kontinuierliche Rührkessel, Rührkesselkaskaden, Strömungsrohre, Strömungsrohre mit Zwangsförderung (z.B. Schneckenmaschinen), Reaktionskneter sowie deren beiliege Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden. Besonders bevorzugt werden zwei- und/oder mehrwellige Extruder eingesetzt. Insbesondere bevorzugt zur kontinuierlichen Herstellung der erfindungsgemäßen modifizierten Polymere in der Schmelze ist die Verwendung einer Reaktorkombination aus Strömungsrohr, Strömungsrohr mit Zwangsförderung und kontinuierlichem Rührkessel in beliebiger Reihenfolge, wobei bevorzugt entweder im Strömungsrohr mit Zwangsförderung oder im kontinuierlichen Rührkessel auch die Entfernung von Restmonomeren und flüchtigen Neben-/Abbauprodukten erfolgt.

Gegebenenfalls können zur Einstellung des gewünschten Molekulargewichts der Segmente B noch Regler verwendet werden. Als Regler eignen sich z. B. Schwefelregler, insbesondere mercaptogruppenhaltige Regler, z. B. Dodecylmercaptan. Die Konzentrationen an Reglern liegen im Allgemeinen bei 0.1 gew%, bis 2,0 gew%, bezogen auf das Gesamtpolymerisat.

Eine weitere Methode zur Herstellung der Pfropfpolymerisate AB stellt die Hydroperoxidation eines Poly-α-Olefins als ersten Schritt dar. Die auf diese Weise gebildeten, kettenständigen Hydroperoxydgruppen können in einer folgenden Stufe die Pfropfpolymerisation der Vinylmonomeren initiieren. (Vgl. H.A.J. Battaerd, G.W. Tregear, Polymer Reviews loc. cit.).

Die Mengen, die an Polymertyp AB in der erfindungsgemäßen Mischung eingesetzt werden, liegen bezogen auf die am Ende der Reaktion polymeren Bestandteile zwischen 5 gew% und 70 gew%, bevorzugt zwischen 20 gew% und 60 gew% und ganz besonders bevorzugt zwischen 25 gew% und 50 gew%.

Die Bindemittel können als Haftvermittler Beschichtungsmassen mit unterschiedlichem Anwendungsgebiet zugefügt werden. Bevorzugt wird der Haftvermittler Formulierungen zur Beschichtung von Polyolefinoberflächen, insbesondere bevorzugt zur Beschichtung von Polypropylenoberflächen zugegeben. Dabei kann es sich beispielsweise um einen Lack, einen Klebstoff oder einen Dichtstoff handeln.

Bei den zu beschichtenden Oberflächen kann es sich auch um andere Materialien als ausschließlich um Polyolefine handeln. Die Haftvermittler haben den großen Vorteil, dass sie in erfindungsgemäßen Kleb- bzw. Lackformulierungen durchaus auch die Haftung gegenüber Metallen wie Aluminium, Stahl oder Zink, gegenüber nicht-Polyolefin-Kunststoffen wie PVC, PET, Polystyrol, ABS, Polycarbonat, Polymethacrylat, wie z.B. Plexiglas der Fa. Evonik, Polyamid, wie Polyamid 6 oder Polyethern, wie Polyoxymethylen bzw. gegenüber anderen Materialien wie Holz, Granit, Beton oder Glas verbessern.

Erfindungsgemäß handelt es sich bei der einen Haftvermittler enthaltenden Beschichtungsmasse um eine Lack- oder Klebstoffformulierung zur Beschichtung von Polyolefinuntergründen oder zum Verkleben von Polyolefinuntergründen oder eine Dichtstoffformulierung mit Haftung auf Polyolefinuntergründen. Bei diesen Formulierungen kann es sich sowohl um Lösungsmittel basierte bzw. wässrige Systeme handeln, als auch um 100%-Systeme z.B. in Form von Schmelzen wie Hotmelts oder Reaktivhotmelts.

Neben dem Haftvermittler und optionalen Lösungsmitteln setzen sich diese Beschichtungsformulierungen aus einem oder mehreren Bindemitteln und optional, Pigmenten, Hilfs-, Prozess- und / oder Füllstoffen zusammen.

Bei den Pigmenten kann es sich um organische oder anorganische - als Reinsubstanz oder vordispergiert zugegeben - handelsübliche oder neuartige Pigmente handeln.

Bei den Bindemitteln handelt es sich um übliche Bindemittel, wie sie in Kleb-, Dicht-, Beschichtungs- und Lackformulierungen zum Einsatz kommen. Als Beispiele, ohne die Erfindung damit in irgendeiner Form einzuschränken, seien Polyacrylate, Polymethacrylate, Polycarbonate, Polyolefine, wie EPDM, EPM, PE, PP, Poly-α-olefine oder Mischpolymerisate aus verschiedenen Olefinen; Polyamide, Polyester, Polyurethane, 2K-Polyurethane, Polyether oder Polystyrole genannt.

Bei den Hilfs- oder Prozessstoffen kann es sich um die Additive handeln, die in Kleb-, Dicht-, Beschichtungs- und Lackformulierungen üblicherweise zum Einsatz kommen. Als Beispiele, ohne die Erfindung damit in irgendeiner Form einzuschränken, seien Entschäumer, Emulgatoren, Kompatibilisierer, Stabilisatoren, Dispergieradditive, Antioxidantien, Kratzfestadditive, Prozessstoffe zur Verminderung von Abrieb bei der Weiterverarbeitung, Katalysatoren, Vernetzer, Beschleuniger oder weitere Haftvermittler genannt.

Die erfindungsgemäße Klebstoffformulierung kann weitere Bestandteile enthalten, die zur Erzielung spezieller Eigenschaften, wie z. B. Verformungsfähigkeit, Haftungsvermögen, Verarbeitungsfähigkeit, Vernetzungsgeschwindigkeit, Vernetzungsdichte, (Schmelz- bzw. Lösungs-) Viskosität, Festigkeit, Kristallisationsgeschwindigkeit, Klebrigkeit, Lagerstabilität usw. notwendig sind. Der Anteil der weiteren Bestandteile liegt in einer besonderen Ausführungsform der vorliegenden Erfindung insbesondere bevorzugt bei maximal 10 gew%. Dies hat den Vorteil, dass die Materialeigenschaften der Klebstoffformulierung im Wesentlichen die des verwendeten erfindungsgemäßen Haftvermittlers sind. Eine solche Klebstoffformulierung lässt sich mit sehr geringem Aufwand herstellen.

Alternativ kann in einer weiteren Ausführungsform der vorliegenden Erfindung der Anteil der weiteren Bestandteile > 10 gew% betragen. In diesem Falle machen die weiteren Bestandteile maximal 95 gew% der Gesamtformulierung, bevorzugt maximal 90 gew%, besonders bevorzugt maximal 85 gew%, insbesondere bevorzugt maximal 80 gew% aus.

Bei den weiteren Bestandteilen kann es sich um Vernetzungsbeschleuniger, insbesondere um Silanolkondensationskatalysatoren, um anorganische und/oder organische Füllstoffe, die wahlweise elektrisch leitfähig oder isolierend sein können, anorganische und/oder organische Pigmente, die wahlweise elektrisch leitfähig oder isolierend sein können, synthetische und/oder natürliche Harze, insbesondere Klebharze, synthetische und/oder natürliche Öle, anorganische und/oder organische, synthetische und/oder natürliche Polymere, die wahlweise elektrisch leitfähig oder isolierend sein können, anorganische und/oder organische, synthetische und/oder natürliche Fasern, die wahlweise elektrisch leitfähig oder isolierend sein können, anorganische und/oder organische Stabilisatoren und/oder anorganische und/oder organische Flammschutzmittel handeln.

Insbesondere umfassen die weiteren Bestandteile Harze, wobei die Harze eingesetzt werden, um bestimmte Eigenschaften der Klebschicht, insbesondere die Klebrigkeit und/oder Haftung, das Fließ- und Kriechverhalten der Klebschicht und/oder die Klebstoffviskosität an besondere Anforderungen anzupassen. Es kann sich dabei um Naturharze und/oder Kunstharze handeln. Im Falle von Naturharzen enthalten diese Naturharze als Hauptbestandteil Abietinsäure (z. B. Kollophonium). Weiterhin kann es sich bei den Harzen um Terpen- bzw. Polyterpenharze, Petroleumharze und/oder Kumaron-Inden-Harze handeln, wobei es sich insbesondere um sogenannte C₅-Harze und/oder C₉-Harze und/oder um Mischpolymerisate aus C₅-/C₉-Harzen handelt. Der Anteil der Harze in der erfindungsgemäßen Heißschmelzklebstoffformulierung beträgt insbesondere maximal 45 gew%, bevorzugt zwischen 1 und 40 gew%, besonders bevorzugt zwischen 2 und 30 gew% und insbesondere bevorzugt zwischen 3 und 20 gew%, bezogen auf die Gesamtformulierung.

Weiterhin können in den erfindungsgemäßen Heißschmelzklebstoffformulierungen klassische amorphe (bzw. teilkristalline) Poly(α-Olefine) (sog. APAOs) als weitere Bestandteile enthalten sein. Bei den genannten amorphen (bzw. teilkristallinen) Poly(α-Olefinen) kann es sich um Homo-/Co- und/oder Terpolymere aus Ethylen, Propylen, 1-Buten bzw. linearen und/oder verzweigten 1-Olefinen mit 5-20 Kohlenstoffatomen handeln, welche z. B. durch klassische Ziegler-Natta-Katalyse oder Metallocenkatalyse erhältlich sind. Der Anteil der amorphen Poly(α-Olefine) liegt insbesondere bei maximal 50 gew%, bevorzugt bei maximal 40 gew%, und besonders bevorzugt bei maximal 30 gew%, bezogen auf die Gesamtformulierung. Vorzugsweise handelt es sich bei den weiteren Bestandteilen um kristalline beziehungsweise teilkristalline Polyolefine, die insbesondere isotaktisches Polypropylen, syndiotaktisches Polypropylen, Polyethylen (HDPE, LDPE und/oder LLDPE), isotaktisches Poly(1-buten), syndiotaktisches Poly(1-buten) deren Copolymere und/oder deren Copolymere mit linearen und/oder verzweigten 1-Olefinen mit 5 bis 10 Kohlenstoffatomen umfassen. Weiterhin ist bevorzugt, dass es sich bei den kristallinen bzw. teilkristallinen Polyolefinen um chemisch modifizierte Polyolefine handelt, wobei die chemische Modifizierung insbesondere solche durch Maleinsäureanhydrid, Itaconsäureanhydrid, Acrylsäure, Acrylate, Methacrylate, ungesättigte Epoxyverbindungen, Silanacrylate, Silane und Hydroxyalkylsilane umfasst.

Weiterhin können die weiteren Bestandteile Polymere mit polaren Gruppen umfassen. Polymere mit polaren Gruppen umfassen Polystyrolcopolymere (z. B. mit Maleinsäureanhydrid, Acrylnitril usw.), Polyacrylate, Polymethacrylate, (Co)polyester, Polyurethane, (Co)polyamide, Polyetherketone, Polyacrylsäure, Polycarbonate sowie chemisch modifizierte Polyolefine (wie z. B. Poly(propylen-graft-maleinsäureanhydrid) oder Poly(propylen-graft-alkoxyvinylsilan). Dabei kann es bei der Vermischung der erfindungsgemäßen Polymere mit den polare Gruppen enthaltenden Polymeren zu einer sofortigen und/oder zeitverzögerten reaktiven Anbindung der Polymerketten kommen, die vorzugsweise dazu führt, dass eine verbesserte Verträglichkeit zwischen den beiden Polymerphasen eintritt, was beispielsweise in einer Verschiebung der Glasübergangstemperaturen der verwendeten Polymere zu erkennen ist. Besonders bevorzugt führt die reaktive Anbindung dazu, dass die Polymerphasen eine gemeinsame Glasübergangstemperatur zeigen, also eine makroskopische Mischbarkeit aufweisen.

Weiterhin können die weiteren Bestandteile Homo- und/oder Copolymere (oder auch Oligomere) auf Basis von Ethylen, Propylen, Butadien, Styrol und/oder Acrylnitril umfassen, welche als weitere Comonomere ein Dien und/oder ein cyclisches Dien, Butadien, Styrol und/oder Isopren umfassen können, insbesondere handelt es sich bei diesen Polymeren um Blockcopolymere, insbesondere um Kautschuke wie z. B. Natur- und Synthesekautschuk, Poly(butadien), Poly(isopren), Styrol-Butadien-Kautschuk, Styrol-Isopren-Kautschuk und Nitrilkautschuk. Der Anteil der Polymere auf Basis von Butadien, Styrol, und/oder Isopren beträgt maximal 20 gew%, bevorzugt 1-15 gew%, besonders bevorzugt 1,5-10 gew% und insbesondere 2-9 gew%, bezogen auf die Heißschmelzklebstoff-formulierungen. Bei Oligomeren handelt es sich bevorzugt um Butadienoligomere.

Weiterhin können die weiteren Bestandteile elastomere Polymere auf Basis von Ethylen, Propylen, einem Dien und/oder *cis*,*cis*-1,5-Cyclooctadien, *exo-*Dicyclopentadien, endo-Dicyclopentadien, 1,4-Hexadien und 5-Ethyliden-2-norbornen umfassen, insbesondere handelt es sich hierbei um Ethylen-Propylen-Rubber, EPM (doppelbindungsfrei, Ethylengehalt 40-75 gew%) und/oder EPDM. Der Anteil der Polymere auf Basis von Ethylen, Propylen, einem Dien und/oder *cis*,*cis*-1,5-Cyclooctadien, exo-Dicyclopentadien, endo-Dicyclopentadien, 1,4-Hexadien und 5-Ethyliden-2-norbornen beträgt üblicherweise maximal 20 gew%, bevorzugt 1-15 gew%, besonders bevorzugt 1,5-10 gew% und insbesondere 2-9 gew%, bezogen auf die Heißschmelzklebstoffformulierungen.

Alternativ können die weiteren Bestandteile Wachse umfassen, insbesondere modifizierte und unmodifizierte Wachse, wobei es sich bei diesen vorzugsweise um kristalline, teilkristalline und/oder amorphe Polyolefinwachse auf Basis von Polyethylen, Polypropylen und/oder Poly(1-buten), Paraffinwachse, Metallocenwachse, Mikrowachse, Polyamidwachse, Polytetrafluorethylenwachse und/oder Fischer-Tropsch-Wachse handelt. Der Anteil der Wachse beträgt maximal 50 gew%, bevorzugt 1-40 gew%, besonders bevorzugt 2-30 gew% und insbesondere bevorzugt 3-20 gew%, bezogen auf die Heißschmelzklebstoffformulierungen.

Weiterhin können die weiteren Bestandteile Füllstoffe umfassen, wobei die Füllstoffe eingesetzt werden, um spezielle Eigenschaftsprofile der Klebschicht, wie z. B. den Temperaturanwendungsbereich, die Festigkeit, die Schrumpfung, die elektrische Leitfähigkeit, den Magnetismus und/oder die Wärmeleitfähigkeit gezielt an spezifische Anforderungen anzupassen. Allgemein handelt es sich bei den Füllstoffen um anorganische und/oder organische Füllstoffe. Die anorganischen Füllstoffe sind insbesondere ausgewählt aus Kieselsäuren (inkl. hydrophobierte Kieselsäuren), Quarzmehl, Kreiden, Titandioxid, Zinkoxid, Zirkonoxid (letztere drei vorzugsweise in nanoskaliger Form), Schwerspat, Glaspartikeln (insbesondere sphärischen Partikeln zur Erhöhung der Lichtreflexion), Glasfasern, Kohlefasern, Asbestpartikeln, Asbestfasern und/oder Metallpulvern. Organische Füllstoffe sind beispielsweise Ruß, Bitumen, vernetztes Polyethylen, vernetzte Kautschuk- bzw. Gummimischungen, synthetische Fasern wie z. B. Polyethylenfasern, Polypropylenfasern, Polyesterfasern, Polyamidfasern, Aramidfasern, Saranfasern, MP-Fasern oder Naturfasern wie Stroh, Holz, Wolle, Baumwolle, Seide, Flachs, Hanf, Jute, und/oder Sisal. Der Anteil der Füllstoffe beträgt maximal 80 gew%, bevorzugt 1-60 gew%, besonders bevorzugt 5-40 gew% und insbesondere bevorzugt 7-30 gew%, bezogen auf die Heißschmelzklebstoffformulierungen.

Ebenfalls können die weiteren Bestandteile Vernetzungsbeschleuniger umfassen. Dies ist besonders dann bevorzugt, wenn die erfindungsgemäßen Polymere in einer Verklebung eingesetzt werden, die in kurzer Zeit nach der Fügung ihre maximale Belastbarkeit erreichen soll. Als Vernetzungsbeschleuniger eignen sich eine Vielzahl von chemischen Verbindungen, insbesondere Brönstedt- und/oder Lewissäuren wie z. B. Essigsäure, Itaconsäure, Zink(II)acetat, Cadmiumacetat, Zinkoxid, Zinkstearat, Zink(II)chlorid, Zinn(IV)chlorid, Dibutylzinnoxid, Dibutylzinndilaurat, Wismutcitrat, Wismut(III)oxid, Wismuttitanat, Tetrabutylgermanium, Tetrabutylzinn, Titanborid, Titan(IV)oxid, Titanacetylacetonat, Tributyltitanat, Natriumchlorid, Magnesium(II)chlorid, Zinkacetylacetonat, Zinkmethacrylat, Zinkniobat, Zinn(II)oxid, Zinn(IV)oxid, Zirkon(IV)acetylacetonat, Zirkon(IV)oxid und/oder Zirkon(IV)silikat.

Ebenfalls können die weiteren Bestandteile Stabilisatoren umfassen, wobei diese eingesetzt werden, um die Klebstoffformulierung vor externen Einflüssen wie z. B. dem Einfluss von (Verarbeitungs-)Wärme, Scherbeanspruchung, Sonneneinstrahlung, Luftfeuchtigkeit und Sauerstoff zu schützen. Geeignete Stabilisatoren sind beispielsweise gehinderte Amine (HALS-Stabilisatoren), gehinderte Phenole, Phosphite und/oder aromatische Amine (wie sie z.B. unter den Produktnamen IRGANOX, KINOX, DOVERNOX, WESTON, IRGAPHOS, DOVERPHOS und/oder IONOL kommerziell erhältlich sind). Besonders bevorzugt enthalten die erfindungsgemäß eingesetzten Stabilisatoren nur eine hydrolytisch aktive Endgruppe pro Molekül. In den genannten Formulierungen beträgt der Anteil der Stabilisatoren maximal 3 gew%, bevorzugt zwischen 0,05 und 2,5 gew% und insbesondere bevorzugt zwischen 0,1 und 2 gew%, bezogen auf die Heißschmelzklebstoffformulierungen. In einer besonderen Ausführungsform erfolgt eine reaktive Anbindung des/der Stabilisators/Stabilisatoren an das erfindungsgemäß modifizierte Polymer, wodurch eine Stabilisatormigration aus der Klebverbindung verhindert wird.

Darüber hinaus können die weiteren Bestandteile ein oder mehrere Öle umfassen, wobei es sich um natürliche und/oder synthetische Öle handeln kann. Diese ein oder mehreren Öle haben vorzugsweise bei der Verarbeitungstemperatur eine Viskosität von 0,1 bis 1.000 mPa*s, bevorzugt von 1-750 mPa*s, am meisten bevorzugt von 2-500 mPa*s. Geeignete Öle sind beispielsweise Mineralöle, (medizinische) Weißöle, Isobutenöle, Butadienöle, hydrierte Butadienöle und/oder Paraffinöle. Der Anteil der ein oder mehreren Öle beträgt maximal 50 gew%, bevorzugt 1-45 gew%, besonders bevorzugt 3-40 gew% und insbesondere 5-38 gew%, bezogen auf die Heißschmelzklebstoffformulierungen.

Weiterhin können in den Heißschmelzklebstoffformulierungen anorganische und/oder organische Pigmente, UV-aktive Substanzen, organische und/oder anorganische Nukleierungsmittel, die die Kristallisation der Polymere beschleunigen und damit die offene Zeit der Verklebung reduzieren, enthalten sein.

In einer weiter bevorzugten Form der erfindungsgemäßen Heißschmelzklebstoffformulierungen handelt es sich bei den vorab beschriebenen Formulierungen um Multiphasenblends.

Bei den Füllstoffen kann es sich um die industriell üblichen Füllstoffe wie zum Beispiel Silikate, Schichtsilikate, Russe oder Kieselsäuren handeln. Ohne, dass diese kurze Auflistung die Erfindung in irgendeiner Form einschränken würde.

Bei den beschichteten Oberflächen kann es sich zum Beispiel um die Oberflächen von Folien, Granulaten, spritzgegossenen oder auf eine andere Art hergestellten Formteilen, Verbundmaterialien oder Laminaten handeln. Im weiteren werden alle diese Darreichungsformen unter dem Begriff "Werkstück" zusammengefasst.

Die auf diese Weise beschichteten Werkstücke können Verwendung finden in der Verpackungsindustrie, z.B. für Lebensmittel oder pharmazeutische Produkte, dem Automobilbau, dem Schiffsbau, der Elektronikindustrie, der Bauindustrie, dem Möbelbau, dem Maschinenbau oder der Herstellung von Spielwaren. Erfindungsgemäße Folien, Formteile, Rohre oder Kabelummantelungen zeichnen sich dadurch aus, dass sie mit einer erfindungsgemäßen Formulierung beschichtet wurden.

Die Beschichtung mit der Lack- bzw. Klebformulierung kann zum Beispiel analog zum Coil Coating über Walzen erfolgen. Die Grundierung kann auch auf die Oberfläche gesprüht oder lackiert werden. Ferner können auch Methoden wie das Spin Coating oder das Tauchlackieren zur Anwendung kommen. Ferner ist es ebenfalls möglich, das Lösungsmittel vor dem Auftragen zu entfernen und die Substratoberfläche mittels Extrusionsbeschichtung oder Coextrusion zu grundieren.

In einer bevorzugten Ausführungsform wird der Haftvermittler als Substanzpolymer bzw. getrocknetes Lösungspolymerisat in einem 100%-System, z.B. für Schmelzanwendungen formuliert.

Die Formulierungen können zwischen 0,1 Gew% und 40 Gew%, bevorzugt zwischen 1 Gew% und 30 Gew% und besonders bevorzugt zwischen 2 Gew% und 20 Gew% der erfindungsgemäßen Haftvermittler enthalten.

### Beispiele

### Messung der dynamischen Viskosität

Die Messung der dynamischen Viskosität erfolgt gemäß DIN EN ISO 53018.

### Messung des Feststoffgehalts

Schnelles Einwiegen von 0,3 - 0,5 g Polymerlösung, auf 0,1 mg genau, in eine tarierte Aluminiumschale und anschließende Zugabe von 5 mL Aceton als Schleppmittel. Anschließend wird das Lösungsmittel zunächst 60 min bei Raumtemperatur und anschließend weitere 60 min bei 105 °C abgedampft. Die Probe wird in einem Exsikkator abgekühlt, gewogen und das Differnzgewicht ermittelt. Die Messung wird für jede Probe dreimal durchgeführt. Bei Abweichungen größer 0,2 Gew-% werden zusätzliche Messungen durchgeführt.

### Bestimmung der PP-Haftung von Lacken

Die PP-Haftung eines Bindemittels auf verschiedenen Substratoberflächen wurde mittels Gitterschnitt-Prüfung inklusive Klebeband-Abriss (im weiteren Tesaabrisstest) DIN EN ISO 2409 untersucht. Dazu wird die Probe unverändert, mit dem nach der Synthese eingestellten Feststoffgehalt mit einer Nassschichtdicke von 60 µm auf das Substrat mittels Spiralrakel aufgetragen und über Nacht bei Raumtemperatur getrocknet. Die Bewertung des Ergebnisses erfolgt mit Werten zwischen 0 (besonders gutes Haftungsbild) bis 5 (keine Haftung). In den Tabellen sind zwei Werte angegeben: bei dem ersten handelt es sich um die optische Beurteilung nach dem Tesaabrisstest und bei dem zweiten um die optische Beurteilung nach der Schnittdurchführung.

### Bestimmung der Mischbarkeit der Haftvermittler mit Lacken

Um die Mischbarkeit der Haftvermittler mit Lackformulierungen nachzuweisen wurden die Beispielproben mit lösungsbasierten Lackformulierungen derart gemischt, dass der Haftvermittler am Feststoff einen Anteil von 5 gew% ausmacht. Diese Mischungen wurden 60 min gerührt und die Mischbarkeit nach zwei Stunden optisch begutachtet. Die Beurteilung der Mischbarkeit erfolgt dabei mit Werten zwischen 0 (homogene Mischung ohne auffällige Stippen) bis 5 (Vollständige Phasenseparation).

Als Lacksysteme für die Mischversuche wurden eine 50%ige Lösung eines Polymethacrylat Bindemittels DEGALAN LP 64/12 und einem PUR-Basislack bestehend aus 47,1 gew% Synocure 854 BA 80, 12,4 gew% Vestanat 2500LV, 7,6 gew% Vestanat T 1890L, 0,16 gew% Tegokat 218 (1 %ig in n-Butylacetat), 0,096 gew% Tego Glide 100 und 4,32 gew% Chroma-Chem 844, sowie 14,16 gew% n-Butylacetat und 14,16 gew% Toluol. Damit hat die Formulierung vor Zugabe der Haftvermittler-Lösung einen Gesamtfeststoffgehalt von 71,68 gew%.

### a) Beispiele für die erfindungsgemäß eingesetzten Polyolefine (Polymertyp A)

Unter Verwendung eines Mischkontaktes eines kristallinen Titantrichlorides in Form eines Aluminium-reduzierten TiCl₃ (TiCl₃*0,33 AlCl₃) und Aluminiumtriisobutyl (im Gewichtsverhätnis 1:4) werden Ethen, Propen und 1-Buten in n-Butan bei 95 °C in einem Laborautoklaven polymerisiert, wobei Wasserstoff als Molmassenregler eingesetzt wird. Die Monomere Ethen und Propen werden während der Reaktionszeit von 3 h kontinuierlich zudosiert, das Monomer 1-Buten wird vorgelegt. Nach 3h wird die Reaktionsmischung mit Isopropanol versetzt, wodurch die Reaktion abgestoppt wird. Sodann wird eine acetonischen Lösung eines Stabilisators (z.B. Irganox) zugegeben. In einem Verdampfer werden nicht umgesetzte Monomere sowie das Lösungsmittel n-Butan verdampft. Die Schmelze des weitgehend amorphen Polyolefins wird bei einer Temperatur von ca. 190 °C abgelassen.

Die Polymere weisen folgende Eigenschaften auf

| Versuchs-Nr. | Polymerzusammensetzung (¹³C-NMR) | | | T_{Erw.} [°C] | PEN [0,1mm] | η*_{190°C} [mPa*s] |
|---|---|---|---|---|---|---|
| | Ethen | Propen | 1-Buten | | | |
| V1 | 0 | 2 | 98 | 118 | 5 | 6.750 |
| 1 | 2 | 24 | 74 | 85 | 13 | 24.300 |
| 2 | 0 | 61 | 39 | 132 | 9 | 3.100 |
| 3 | 3,5 | 84,5 | 12 | 106 | 14 | 48.600 |
| 4 | 5,1 | 61,4 | 35 | 117 | 15 | 223.000 |
| 5 | 4 | 67,3 | 28,7 | 112 | 10 | 41.800 |

Vergleichsbeispiel V1 ist aufgrund des sehr geringen Propylengehalts nicht erfindungsgemäß.

### b) Beispiele für die erfindungsgemäß synthetisierten Pfropfcopolymere (Polymertyp AB)

### Beispiel 6

In einem Doppelmantelgefäß mit angeschlossenem Thermostaten, Rückflusskühler, Blattrührer und Innenthermometer werden 240 g n-Butylacetat und 100 g Polyolefin des Typs 1 vorgelegt. Unter Rühren wird das Polyolefin bei 100 °C innerhalb von einer Stunde vollständig aufgelöst und anschließend mit 0,78 g t-Butyl-per-2-ethylhexanoat versetzt. Darauf wird mittels einer Dosierpumpe eine Mischung aus 75 g Methylmethacrylat, 75 g n-Butylacrylat und 2,3 g t-Butyl-per-2-ethylhexanoat über einen Zeitraum von 90 min zudosiert.

Nach weiteren 150 min Reaktionszeit wird die Polymerlösung auf 50 °C abgekühlt und zur Verringerung der Lösungsviskosität mit 180 g n-Butylacetat verdünnt. Nach weiteren 60 min Rühren zur Homogenisierung wird die Dispersion auf Raumtemperatur abgekühlt.

### Beispiel 7

In einem Doppelmantelgefäß mit angeschlossenem Thermostaten, Rückflusskühler, Blattrührer und Innenthermometer werden 316 g n-Butylacetat und 120 g Polyolefin des Typs 3 vorgelegt. Unter Rühren wird das Polyolefin bei 100 °C innerhalb von einer Stunde vollständig aufgelöst und anschließend mit 1,46 g t-Butyl-per-2-ethylhexanoat versetzt. Darauf wird mittels einer Dosierpumpe eine Mischung aus 140 g Methylmethacrylat, 140 g n-Butylacrylat und 4,25 g t-Butyl-per-2-ethylhexanoat über einen Zeitraum von 90 min zudosiert.

Nach weiteren 150 min Reaktionszeit wird die Polymerlösung auf 50 °C abgekühlt und zur Verringerung der Lösungsviskosität mit 244 g n-Butylacetat verdünnt. Nach weiteren 60 min Rühren zur Homogenisierung wird die Dispersion auf Raumtemperatur abgekühlt.

### Beispiel 8

In einem Doppelmantelgefäß mit angeschlossenem Thermostaten, Rückflusskühler, Blattrührer und Innenthermometer werden 327 g n-Butylacetat und 120 g Polyolefin des Typs 5 vorgelegt. Unter Rühren wird das Polyolefin bei 100 °C innerhalb von einer Stunde vollständig aufgelöst und anschließend mit 2,91 g t-Butyl-per-2-ethylhexanoat versetzt. Darauf wird mittels einer Dosierpumpe eine Mischung aus 280 g n-Butylacrylat und 8,51 g t-Butyl-per-2-ethylhexanoat über einen Zeitraum von 90 min zudosiert.

Nach weiteren 150 min Reaktionszeit wird die Polymerlösung auf 90 °C abgekühlt und zur Verringerung der Lösungsviskosität mit 243 g n-Butylacetat verdünnt. Nach weiteren 60 min Rühren zur Homogenisierung wird die Dispersion auf Raumtemperatur abgekühlt.

### Beispiel 9

In einem Doppelmantelgefäß mit angeschlossenem Thermostaten, Rückflusskühler, Blattrührer und Innenthermometer werden 316 g n-Butylacetat und 120 g Polyolefin des Typs 5 vorgelegt. Unter Rühren wird das Polyolefin bei 100 °C innerhalb von einer Stunde vollständig aufgelöst und anschließend mit 1,46 g t-Butyl-per-2-ethylhexanoat versetzt. Darauf wird mittels einer Dosierpumpe eine Mischung aus 136 g Methylmethacrylat, 136 g n-Butylacrylat, 8 g 3-Methacryloxypropyltrimethoxysilan und 4,25 g t-Butyl-per-2-ethylhexanoat über einen Zeitraum von 90 min zudosiert.

Nach weiteren 150 min Reaktionszeit wird die Polymerlösung auf 50 °C abgekühlt und zur Verringerung der Lösungsviskosität mit 244 g n-Butylacetat verdünnt. Nach weiteren 60 min Rühren zur Homogenisierung wird die Dispersion auf Raumtemperatur abgekühlt.

### Beispiel 10

In einem Doppelmantelgefäß mit angeschlossenem Thermostaten, Rückflusskühler, Blattrührer und Innenthermometer werden 316 g n-Butylacetat und 120 g Polyolefin des Typs 5 vorgelegt. Unter Rühren wird das Polyolefin bei 100 °C innerhalb von einer Stunde vollständig aufgelöst und anschließend mit 1,46 g t-Butyl-per-2-ethylhexanoat versetzt. Darauf wird mittels einer Dosierpumpe eine Mischung aus 272 g n-Butylacrylat, 8 g 3-Methacryloxypropyltrimethoxysilan und 4,25 g t-Butyl-per-2-ethylhexanoat über einen Zeitraum von 90 min zudosiert. Nach weiteren 150 min Reaktionszeit wird die Polymerlösung auf 50 °C abgekühlt und zur Verringerung der Lösungsviskosität mit 244 g n-Butylacetat verdünnt. Nach weiteren 60 min Rühren zur Homogenisierung wird die Dispersion auf Raumtemperatur abgekühlt.

### Beispiel 11

In einem Doppelmantelgefäß mit angeschlossenem Thermostaten, Rückflusskühler, Blattrührer und Innenthermometer werden 316 g n-Butylacetat und 120 g Polyolefin des Typs 5 vorgelegt. Unter Rühren wird das Polyolefin bei 100 °C innerhalb von einer Stunde vollständig aufgelöst und anschließend mit 1,46 g t-Butyl-per-2-ethylhexanoat versetzt. Darauf wird mittels einer Dosierpumpe eine Mischung aus 272 g n-Butylmethacrylat, 8 g 3-Methacryloxypropyltrimethoxysilan und 4,25 g t-Butyl-per-2-ethylhexanoat über einen Zeitraum von 90 min zudosiert.

Nach weiteren 150 min Reaktionszeit wird die Polymerlösung auf 50 °C abgekühlt und zur Verringerung der Lösungsviskosität mit 244 g n-Butylacetat verdünnt. Nach weiteren 60 min Rühren zur Homogenisierung wird die Dispersion auf Raumtemperatur abgekühlt.

### Ergebnisse der Beispielsynthese

| Versuchs-Nr. | η_{190°C} | Feststoffgehalt | Aussehen | Polyolefin / Poly(meth)acrylat |
|---|---|---|---|---|
| | [mPa*s] | Gew-% | | |
| 6 | 3500 | 36,2 | weiß, dispers | 40/60 |
| 7 | 1600 | 40,2 | weiß, dispers | 30/70 |
| 8 | 360 | 40,4 | weiß, dispers | 30/70 |
| 9 | 2300 | 40,6 | weiß, dispers | 30/70 |
| 10 | 180 | 40,6 | weiß, dispers | 30/70 |
| 11 | 6800 | 39,8 | weiß, dispers | 30/70 |

Anhand dieser Ergebnisse kann gezeigt werden, dass überraschend niedrige Viskositäten gefunden wurden. Auch mit einem Feststoffgehalt von ca. 40 Gew% und einem Polyolefinanteil im Festkörper von 30 Gew-% bzw. 40 Gew-% haben die Lösungen bzw. Dispersionen eine gute Verarbeitbarkeit und weisen sämtlich keine oder nur geringe Phasentrennungen auf. Einzig Beispiel 8 zeigte nach einer Lagerung von sieben Tagen eine geringe Phasentrennung in eine klare und eine weiß-disperse Flüssigphase. Die Probe lies sich durch Schütteln oder Rühren jedoch leicht wieder redispergieren. Damit weisen die erfindungsgemäßen Polymerdispersionen eine überraschend gute Lagerstabilität auf.

### Optische Beurteilung der Filme nach Tesaabrisstest und Gitterschnittprüfung

| | Optische Beurteilung | | Mischbarkeit | |
|---|---|---|---|---|
| Beispiel | Tesaabrisstest | Gitterschnitt | 5%ig in Methacrylatsystem | 5%ig in PUR-Basislack |
| 6 | 1 | 3 | 1 | 1 |
| 7 | 1 | 3 | 0 | 0 |
| 9 | 0 | 2 | 0 | 0 |

Durch die Messung der Direkthaftung auf PP-Folien konnte gezeigt werden, dass die erfindungsgemäßen Haftvermittler zur Vermittlung einer Haftung auf unpolaren Substraten geeignet sind. Durch diese Versuche konnte gezeigt werden, dass die erfindungsgemäßen Bindemittel zusätzlich als Primer für weitere Beschichtungen eingesetzt werden können.

Die Mischversuche mit einem Methacrylat-Bindemittel bzw. einem PUR-Basislack zeigen eine gute Verträglichkeit - und damit Coformulierbarkeit - mit Lacksystemen. Aus der Kombination dieser beiden Ergebnisse ist auf eine gute Anwendbarkeit als Haftvermittler zurückzuschließen.

## Patentansprüche

1. Beschichtungsmassen zur Beschichtung von Polyolefinen, enthaltend einen Haftvermittler, enthaltend eine Schmelze, filmbildende Dispersion oder Lösung, **dadurch gekennzeichnet, dass**
ein Polymertyp A, ein Polyolefin oder ein Polyolefingemisch, enthalten ist,
ein Polymertyp B, ein (Meth)acrylathomo- oder/und -copolymer enthaltend Standardmethacrylate und/oder Standardacrylate, enthalten ist und
ein Polymertyp AB, ein Pfropfcopolymer aus Polymertyp A und Polymertyp B, enthalten ist,
dass die filmbildende Schmelze, Dispersion oder Lösung halogenfrei und säurefrei ist, wobei säurefrei maximal 70 mmol Säuregruppen / 1 g Polymer umschreibt und halogenfrei maximal 10 mmol Halogenatome / 1 kg Polymer umschreibt,
und
dass die Menge an Polymertyp A zwischen 5 gew% und 60 gew% beträgt, dass die Menge an Polymertyp B zwischen 5 gew% und 70 gew% beträgt, dass die Menge an Polymertyp AB zwischen 5 gew% und 70 gew% beträgt, bezogen auf die Gesamtmasse der Polymertypen A, B und AB.

2. Beschichtungsmassen gemäß Anspruch 1 **dadurch gekennzeichnet, dass** Polymertyp B und Polymertyp AB des Haftvermittlers Silylgruppen aufweisen.

3. Beschichtungsmassen gemäß Anspruch 1 oder Anspruch 2 **dadurch gekennzeichnet, dass** der Haftvermittler als Polymerlösung coformuliert wird, dass das Masseverhältnis der Summe der Polymertypen A, B und AB zur Masse des Lösungsmittels oder des Lösungsmittelgemischs zwischen 3:1 und 1:3, bevorzugt zwischen 2:1 und 1:2 beträgt, und dass das Lösungsmittelgemisch keine Aromaten enthält.

4. Beschichtungsmassen gemäß Anspruch 1 oder Anspruch 2 **dadurch gekennzeichnet, dass** der Haftvermittler als Schmelze und 100%-System coformuliert wird.

5. Beschichtungsmassen zur Beschichtung von Polyolefinen gemäß einem der Ansprüche 1 bis 4 **dadurch gekennzeichnet, dass** es sich bei Polymertyp A des Haftvermittlers um ein ataktisches Polypropylen, ataktisches Poly-1-buten und/oder Co- und/oder Terpolymer der Monomerzusammensetzung
0 bis 95 gew%, bevorzugt 3 bis 95 gew% eines oder mehrerer α-Olefine mit
4 bis 20 Kohlenstoffatomen,
5 bis 100 gew%, bevorzugt 5 bis 97 gew% Propen und
0 bis 50 gew%, bevorzugt 0 bis 20 gew% Ethen
handelt.

6. Beschichtungsmassen_zur Beschichtung von Polyolefinen gemäß Anspruch 5 **dadurch gekennzeichnet, dass** als α-Olefine mit 4 bis 20 Kohlenstoffatomen 1-Buten, 1-Penten, 1-Hexen, 1-Octen, 1-Decen, 1-Dodecen, 3-Methyl-1-buten, ein Methylpenten, bevorzugt 4-Methyl-1-penten, ein Methylhexen oder ein Methylhepten allein oder in Mischung eingesetzt werden.

7. Beschichtungsmassen_zur Beschichtung von Polyolefinen gemäß einem der vorhergehenden Ansprüche **dadurch gekennzeichnet, dass** es sich bei dem Polymertyp AB des Haftvermittlers um ein Pfropfcopolymer mit einer Polyolefinhauptkette und Poly(meth)acrylatseitenketten handelt.

8. Beschichtungsmassen_zur Beschichtung von Polyolefinen gemäß einem der vorhergehenden Ansprüche **dadurch gekennzeichnet, dass** zur Herstellung des Haftvermittlers zu einer Mischung eines Polymers des Typs A und eines Initiators in einem Lösungsmittel Monomere, die zur Komponente B führen, dosiert und polymerisiert werden.

9. Klebstoffformulierung zum Verkleben von Polyolefinuntergründen, **dadurch gekennzeichnet, dass** es sich bei der Klebstoffzusammensetzung um eine Beschichtungsmasse_nach einem der vorstehenden Ansprüche handelt.

10. Lackformulierung zur Beschichtung von Polyolefinuntergründen, **dadurch gekennzeichnet, dass** es sich bei der Lackformulierung um eine Beschichtungsmasse nach einem der Ansprüche 1 bis 8 handelt.

11. Dichtstoffformulierung mit Haftung auf Polyolefinuntergründen, **dadurch gekennzeichnet, dass** es sich bei der Dichtstoffzusammensetzung um eine Beschichtungsmasse nach einem der Ansprüche 1 bis 8 handelt.

12. Formulierung gemäß einem der Ansprüche 9 bis 11 enthaltend einen Haftvermittler **dadurch gekennzeichnet, dass** die Formulierung frei von Lösungsmitteln ist.

13. Formulierung gemäß einem der Ansprüche 9 bis 11 enthaltend einen Haftvermittler **dadurch gekennzeichnet, dass** die Formullierung als Lösungsmittel Wasser enthält.

14. Folie, Formteil, Rohr oder Kabelummantelung **dadurch gekennzeichnet, dass** sie mit einer Formulierung nach einem der Ansprüche 12 oder 13 beschichtet wurde.

## Claims

1. Coating compositions for coating polyolefins, comprising an adhesion promoter, comprising a melt, film-forming dispersion or solution, **characterized in that**
a polymer type A, a polyolefin or a polyolefin mixture, is present,
a polymer type B, a (meth)acrylate homo- or/and copolymer comprising standard methacrylates and/or standard acrylates, is present, and
a polymer type AB, a graft copolymer made of polymer type A and polymer type B, is present,
and that the film-forming melt, dispersion or solution is halogen-free and acid-free, where acid-free describes at most 70 mmol of acid groups / 1 g of polymer and halogen-free describes at most 10 mmol of halogen atoms / 1 kg of polymer, and
that the amount of polymer type A is from 5% by weight to 60% by weight,
that the amount of polymer type B is from 5% by weight to 70% by weight,
and that the amount of polymer type AB is from 5% by weight to 70% by weight,
based on the entirety of polymer types A, B and AB.

2. Coating compositions according to Claim 1, **characterized in that** polymer type B and polymer type AB of the adhesion promoter have silyl groups.

3. Coating compositions according to Claim 1 or Claim 2, **characterized in that** the adhesion promoter is coformulated as polymer solution, that the ratio by mass of the entirety of polymer types A, B, and AB to the mass of the solvent or of the solvent mixture is from 3:1 to 1:3, preferably from 2:1 to 1:2, and that the solvent mixture comprises no aromatics.

4. Coating compositions according to Claim 1 or Claim 2, **characterized in that** the adhesion promoter is coformulated as melt and 100% system.

5. Coating compositions for coating polyolefins, according to any of Claims 1 to 4, **characterized in that** polymer type A of the adhesion promoter is an atactic polypropylene, atactic poly-1-butene, and/or co- and/or terpolymer of the following monomer constitution:
from 0 to 95% by weight, preferably from 3 to 95% by weight, of one or more α-olefins having from 4 to 20 carbon atoms,
from 5 to 100% by weight, preferably from 5 to 97% by weight, of propene, and
from 0 to 50% by weight, preferably from 0 to 20% by weight, of ethene.

6. Coating compositions for coating polyolefins, according to Claim 5, **characterized in that** α-olefins used having from 4 to 20 carbon atoms comprise 1-butene, 1-pentene, 1-hexene, 1-octene, 1-decene, 1-dodecene, 3-methyl-1-butene, a methylpentene, preferably 4-methyl-1-pentene, a methylhexene, or a methylheptene, alone or in a mixture.

7. Coating compositions for coating polyolefins, according to any of the preceding claims, **characterized in that** the polymer type AB of the adhesion promoter is a graft copolymer having a polyolefin main chain and poly(meth)acrylate side chains.

8. Coating compositions for coating polyolefins according to any of the preceding claims, **characterized in that**, in order to produce the adhesion promoter, monomers which lead to component B are fed into a mixture of a polymer of type A and of an initiator in a solvent, and are polymerized.

9. Adhesive formulation for the adhesive bonding of polyolefin substrates, **characterized in that** the adhesive composition is a coating composition according to any of the preceding claims.

10. Coating formulation for coating polyolefin substrates, **characterized in that** the coating formulation is a coating composition according to any of Claims 1 to 8.

11. Sealant formulation with adhesion to polyolefin substrates, **characterized in that** the sealant formulation is a coating composition according to any of Claims 1 to 8.

12. Formulation according to any of Claims 9 to 11, comprising an adhesion promoter, **characterized in that** the formulation is free from solvents.

13. Formulation according to any of Claims 9 to 11, comprising an adhesion promoter, **characterized in that** the formulation comprises water as solvent.

14. Foil, molding, tube, or cable sheathing, **characterized in that** it has been coated with a formulation according to any of Claims 12 and 13.

## Revendications

1. Matériaux de revêtement pour le revêtement de polyoléfines, contenant un promoteur d'adhésion, contenant une masse fondue, une dispersion ou une solution filmogène, **caractérisés en ce que** un type de polymère A, une polyoléfine ou un mélange de polyoléfines, est contenu,
un type de polymère B, un homo- et/ou copolymère de (méth)acrylate contenant des méthacrylates standards et/ou des acrylates standards, est contenu, et
un type de polymère AB, un copolymère greffé du type de polymère A et du type de polymère B, est contenu,
**en ce que** la masse fondue filmogène, la dispersion ou la solution est exempte d'halogènes et exempte d'acides, exempte d'acides signifiant au plus 70 mmoles de groupes acides/1 g de polymère, et exempte d'halogènes signifiant au plus 10 mmoles d'atomes d'halogène/1 kg de polymère,
et
**en ce que** la quantité du type de polymère A est comprise entre 5 % en poids et 60 % en poids, **en ce que** la quantité du type de polymère B est comprise entre 5 % en poids et 70 % en poids, **en ce que** la quantité du type de polymère AB est comprise entre 5 % en poids et 70 % en poids, par rapport à la masse totale des types de polymères A, B et AB.

2. Matériaux de revêtement selon la revendication 1, **caractérisés en ce que** le type de polymère B et le type de polymère AB du promoteur d'adhésion comprennent des groupes silyle.

3. Matériaux de revêtement selon la revendication 1 ou la revendication 2, **caractérisés en ce que** le promoteur d'adhésion est co-formulé sous la forme d'une solution de polymère, **en ce que** le rapport en masse entre la somme des types de polymère A, B et AB et la masse du solvant ou du mélange de solvants est compris entre 3:1 et 1:3, de préférence entre 2:1 et 1:2, et **en ce que** le mélange de solvants ne contient pas de composés aromatiques.

4. Matériaux de revêtement selon la revendication 1 ou la revendication 2, **caractérisés en ce que** le promoteur d'adhésion est co-formulé sous la forme d'une masse fondue et d'un système à 100 %.

5. Matériaux de revêtement pour le revêtement de polyoléfines selon l'une quelconque des revendications 1 à 4, **caractérisés en ce que** le type de polymère A du promoteur d'adhésion consiste en un polypropylène atactique, un poly-1-butène atactique et/ou un co-et/ou terpolymère de la composition de monomères suivante :
0 à 95 % en poids, de préférence 3 à 95 % en poids, d'une ou de plusieurs α-oléfines contenant 4 à 20 atomes de carbone,
5 à 100 % en poids, de préférence 5 à 97 % en poids, de propène, et
0 à 50 % en poids, de préférence 0 à 20 % en poids, d'éthène.

6. Matériaux de revêtement pour le revêtement de polyoléfines selon la revendication 5, **caractérisés en ce qu'**en tant qu'α-oléfines contenant 4 à 20 atomes de carbone, le 1-butène, le 1-pentène, le 1-hexène, le 1-octène, le 1-décène, le 1-dodécène, le 3-méthyl-1-butène, un méthylpentène, de préférence le 4-méthyl-1-pentène, un méthylhexène ou un méthylheptène sont utilisés, seuls ou en mélange.

7. Matériaux de revêtement pour le revêtement de polyoléfines selon l'une quelconque des revendications précédentes, **caractérisés en ce que** le type de polymère AB du promoteur d'adhésion consiste en un copolymère greffé contenant une chaîne principale polyoléfine et des chaînes latérales poly(méth)acrylate.

8. Matériaux de revêtement pour le revêtement de polyoléfines selon l'une quelconque des revendications précédentes, **caractérisés en ce que**, pour la fabrication du promoteur d'adhésion, des monomères qui conduisent au composant B sont ajoutés à un mélange d'un polymère de type A et d'un initiateur dans un solvant, et polymérisés.

9. Formulation d'adhésif pour le collage de substrats en polyoléfine, **caractérisée en ce que** la composition d'adhésif consiste en un matériau de revêtement selon l'une quelconque des revendications précédentes.

10. Formulation de vernis pour le revêtement de substrats en polyoléfine, **caractérisée en ce que** la formulation de vernis consiste en un matériau de revêtement selon l'une quelconque des revendications 1 à 8.

11. Formulation d'agent d'étanchéité présentant une adhésion sur des substrats en polyoléfine, **caractérisée en ce que** la composition d'agent d'étanchéité consiste en un matériau de revêtement selon l'une quelconque des revendications 1 à 8.

12. Formulation selon l'une quelconque des revendications 9 à 11, contenant un promoteur d'adhésion, **caractérisée en ce que** la formulation est exempte de solvants.

13. Formulation selon l'une quelconque des revendications 9 à 11, contenant un promoteur d'adhésion, **caractérisée en ce que** la formulation contient de l'eau en tant que solvant.

14. Film, pièce moulée, tube ou gainage de câble, caractérisé(e) en ce qu'il ou elle a été revêtu(e) avec une formulation selon l'une quelconque des revendications 12 ou 13.
